# EUROPEAN PATENT SPECIFICATION

(11) **EP 2 182 779 B1**
(45) Date of publication and mention of the grant of the patent: **11.09.2013**
(21) Application number: 09013517.9
(22) Date of filing: 27.10.2009
(51) Int. Cl.: H05B 41/04

(54) **Discharge lamp lighting device and illumination fixture**
Beleuchtungsvorrichtung für eine Entladelampe und Beleuchtungsbefestigung
Dispositif d'éclairage par lampe à décharge et accessoire d'illumination

(30) Priority: 28.10.2008 JP 2008277399
(43) Date of publication of application: 05.05.2010
(73) Proprietor: Panasonic Corporation, Osaka 571-8501 (JP)
(72) Inventor: Naoki, Komatu, Kobe Hyougo (JP)
(74) Representative: Rüger, Barthelt & Abel

(56) References cited:
- EP-A2- 1 619 936
- WO-A1-03/039206
- US-B2- 6 518 712

## Description

### [Field of the Invention]

The present invention relates to a discharge lamp lighting device and an illumination fixture.

### [Background Art]

A discharge lamp lighting device including a power converting part for receiving DC power and outputting AC power and a control part for controlling the power converting part have been conventionally provided as a discharge lamp lighting devices for lighting a hot-cathode type discharge lamp such as a high-pressure discharge lamp also called as an HID (high-intensity discharge lamp).

As a discharge lamp lighting device of this type, there is provided a discharge lamp lighting device in which a control part performs, at start of a discharge lamp, an electrode heating operation to make a frequency of output power of the power converting part relatively high in order to heat each electrode of the discharge lamp after a starting operation to allow to start the discharge lamp by making an output voltage of the power converting part relatively high and before starting a steady operation to allow the power converting part to output AC power for maintaining lighting of the discharge lamp to the discharge lamp (e.g. refer to Patent Document 1).

According to the above discharge lamp lighting device, discharge observed after shifting to the steady operation is stabilized with suppressing fade-out of the lighting, in comparison with the case without performing the electrode heating operation.
[Patent Document 1] Japanese Translation of PCT No. 2005-507553

### [Disclosure of the Invention]

### [Problems to be solved by the Invention]

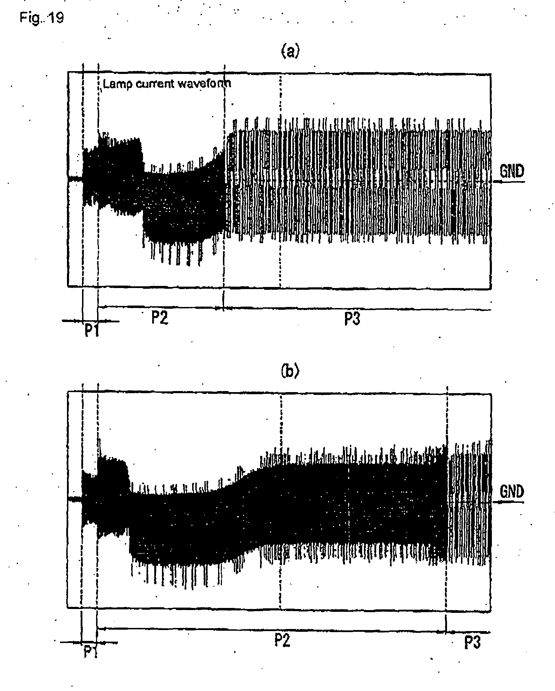

Here, as shown in Fig. 19(a), if an electrode heating period P2 during which an electrode heating operation is performed following a starting period P1 to perform a starting operation is short, an electrode of a discharge lamp are not heated sufficiently prior to start a steady period P3 to perform a steady operation, whereby an output current to the discharge lamp (referred to as a "lamp current" hereinafter) becomes uneven between polarities thereof. When the electrode heating operation shifts to the steady operation without sufficiently heating the electrodes of the discharge lamp, discharge becomes unstable after shift to the steady operation, thereby possibly causing fade-out. Accordingly, it is necessary to sufficiently increase power outputted to the discharge lamp through the electrode heating period P2 by, for example, extending the electrode heating period P2 as shown in Fig. 19(b), but the amount of power (i.e. current-time product) required for the electrode heating period P2 varies in each discharge lamp.

However, if the above amount of power is determined to satisfy a discharge lamp which requires a largest amount of power among discharge lamps assumed to be connected, the amount of power is excessive to the other discharge lamps. In order to suppress adverse effects to the life of the discharge lamps, the above amount of power needs to be made smaller as much as possible.

A small lump current also requires extension of the electrode heating period P2 (i.e. a duration time of the electrode heating operation).
EP 1 619 936 A2 discloses a driver circuit for a HID-lamp, having a circuit arrangement for applying a high frequency signal for igniting the lamp and for applying a low frequency signal for operating the lamp after ignition. To avoid rectification effects in the steady-state low frequency operation of the lamp, the driver circuit is further configured to drive the HID lamp with a high frequency signal immediately after ignition of the HID lamp for a time period before switching to the low frequency operation. The duration of the time period is variable and depends on at least one operating parameter of the lamp, such as the symmetry of the amplitude of current through the lamp or the voltage at the lamp relative to the zero value.

The present invention has been achieved by taking the above problems into consideration, having an object to provide a discharge lamp lighting device and an illumination fixture in which the amount of power supplied to a discharge lamp during an electrode heating operation can be appropriately adjusted for each discharge lamp while suppressing a duration time of the electrode heating operation to be relatively short.
To meet this object, the present invention provides a discharge lamp lighting device having the features of independent claim 1 and an illumination fixture as claimed in dependent claim 11. Preferred embodiments of present invention are subject-matter of dependent claims.

### [Means adapted to solve the Problems]

According to a first aspect of the present invention, a discharge lamp lighting device includes a power converting part for receiving DC power and outputting AG power, a starting part connected between output ends of the power converting part together with a discharge lamp so as to generate a high voltage for starting the discharge lamp, and a control part for controlling the power converting part, wherein the control part performs, at start of the discharge lamp, after performing a starting operation to allow the discharge lamp to start with a high voltage generated by the starting part and before starting a steady operation to allow the power converting part to output AC power for maintaining the lighting of the discharge lamp to the discharge lamp, an electrode heating operation to make a frequency outputted from the power converting part higher than that in the steady operation in order to heat each electrode of the discharge lamp, the discharge lamp lighting device includes a symmetry determining part for determining whether or not an output current outputted to the discharge lamp is in a positive-negative symmetrical state, and the control part refers to a determination result by the symmetry determining part at current detection timing with predetermined time intervals during the electrode heating operation, and shifts the operation to the steady operation when the symmetry determining part determines that the output current is in a positive-negative symmetrical state at the current detection timing, while increases an output current to the discharge lamp to be larger than that at least in starting the electrode heating operation when the symmetry determining part determines that the output current is in the positive-negative asymmetrical state. In this case the control part increases the current amplitude of the output current to the discharge lamp when it has been detected that the absolute value of the difference of the amplitude (peak value) between negative and positive polarities in the lamp current, which is characteristic of a predetermined asymmetry in the lamp current, has increased.

According to the present invention, the process shifts to the steady operation when the symmetry determining part determines that the output current is in a positive-negative symmetrical output current at the current detection timing during the electrode heating operation, whereby the amount of power supplied to the discharge lamp during the electrode heating operation can be appropriately adjusted for each discharge lamp, in comparison with the case in which a duration time of the electrode heating operation is constantly fixed. Moreover, the output current to the discharge lamp is increased to be larger than that at least in starting the electrode heating operation when the symmetry determining part determines that the output current is in the positive-negative asymmetrical state at current detection timing, whereby a duration time of the electrode heating operation can be shortened in comparison with the case of not increasing the output current to the discharge lamp.

According to a second aspect of the present invention, in the first aspect of the present invention, the power converting part includes a step-down chopper circuit for stepping down the received DC power and a full bridge circuit for converting the DC output power of the step-down chopper circuit.

According to a third aspect of the present invention, in the first aspect of the present invention, the power converting part includes a full bridge circuit and the control part controls output power of the power converting part by a duty ratio obtained in turning on/off a switching element constituting the full bridge circuit.

According to a fourth aspect of the present invention, in the first aspect of the present invention, the power converting part includes a half bridge circuit and the control part controls output power of the power converting part by a duty ratio obtained in turning on/off a switching element constituting the half bridge circuit.

According to a fifth aspect of the present invention, in any of the first to fourth aspects of the present invention, the control part increases an output current to the discharge lamp when the symmetry determining part determines that the output current is in the positive-negative asymmetrical state at first current detection timing, and, after that, sets an output current to the discharge lamp constant until the electrode heating operation is finished.

According to a sixth aspect, defined in claim 1 of the present invention, in the fifth aspect of the present invention, the control part determines an increase width of the output current to the discharge lamp resulting from the determination of the symmetry determining part that the output current is in the positive-negative asymmetrical state in accordance with a difference of peak values between polarities of the output current of the power converting part at the first current detection timing.

According to a seventh aspect, defined in claim 1 of the present invention, in any of the first to fourth aspects of the present invention, in the case where the symmetry determining part determines that the output current is in the positive-negative asymmetrical state at the current detection timing, an output current to the discharge lamp after the current detection timing in accordance with the difference of peak values between polarities of the output current of the power converting part at the current detection timing.

According to an eighth aspect, defined in claim 1 of the present invention, in the seventh aspect of the present invention, the control part increases, in the case where the symmetry determining part determines that the output current is in the positive-negative asymmetrical state at the current detection timing, an output current to the discharge lamp after the current detection timing larger as an increase in the difference of peak values between polarities of the output current from the power converting part at the current detection timing.

According to a ninth aspect of the present invention, in any of the first to eighth aspects of the present invention, the control part calculates as needed, during the electrode heating operation, a time integrated value of an amplitude of a current outputted to the discharge lamp, as well as finishes the electrode heating operation upon the time integrated value reaching a predetermined upper limit value.

According to a tenth aspect of the present invention, in the ninth aspect of the present invention, the control part causes the power converting part to stop outputting AC power after the time integrated value of the amplitude of the current outputted to the discharge lamp reaches the upper limit value and the electrode heating operation is finished.

According to the present invention, an electrical stress applied to a discharge lamp and circuit components can be suppressed in comparison with the case without causing the power converting part to stop outputting AC power.

According to an eleventh aspect of the present invention, in the ninth aspect of the present invention, the control part returns the process to the starting operation after the time integrated value of the amplitude of the current outputted to the discharge lamp reaches the upper limit value and the electrode heating operation is finished.

According to the present invention, startability can be improved in comparison with the tenth aspect of the present invention.

According to a twelfth aspect of the present invention, in the ninth aspect of the present invention, the control part returns the process to the starting operation after causing the power converting part to stop outputting AC power over a predetermined stop time, after the time integrated value of the amplitude of the current outputted to the discharge lamp reaches the upper limit value and the electrode heating operation is finished.

According to the present invention, startability can be improved in comparison with the tenth aspect of the invention and it is made difficult to have half-wave discharge in the discharge lamp in the electrode heating operation performed after returning to the starting operation in comparison with the eleventh aspect of the present invention.

According to a thirteenth aspect of the present invention, in the eleventh or twelfth aspect of the present invention, the control part counts the number of times of returning from the electrode heating operation to the starting operation, and causes the power converting part to stop outputting AC power, when the time integrated value of the amplitude of the current outputted to the discharge lamp reaching the upper limit value in the electrode heating operation after the number of times reached the predetermined upper limit number of times.

According to the present invention, it is made possible to prevent an excessive electrical stress from being applied to the discharge lamp and the circuit components resulting from unlimitedly repeating the starting operation and the electrode heating operation.

A fourteenth aspect of the present invention includes the discharge lamp lighting device according to any one of the first to thirteenth aspects of the present invention and a fixture main body for holding the discharge lamp lighting device.

### [Effect of the Invention]

According to the first aspect of the present invention, the process proceeds to the steady operation when the symmetry determining part determines that the output current is in the positive-negative symmetrical state at current detection timing during the electrode heating operation, whereby the amount of power supplied to the discharge lamp during the electrode heating operation can be appropriately adjusted for each discharge lamp in comparison with the case in which a duration time of the electrode heating operation is constantly fixed. Also, the output current to the discharge lamp is increased to be larger than that at least in starting the electrode heating operation when the symmetry determining part determines that the output current is in the positive-negative asymmetrical state at current detection timing, so that the duration time of the electrode heating operation can be shortened in comparison with the case without increasing the output current to the discharge lamp.

According to the tenth aspect of the present invention, the control part causes the power converting part to stop outputting AC power after finishing the electrode heating operation upon the time integrated value of the amplitude of the current outputted the discharge lamp reaching the upper limit value, whereby an electrical stress applied to the discharge lamp and circuit components can be suppressed in comparison with the case without causing the power converting part to stop outputting AC power.

According to the eleventh aspect of the present invention, the control part returns the process to the starting operation after the time integrated value of the amplitude of the current outputted to the discharge lamp reaches the upper limit value and the electrode heating operation is finished, whereby startability can be improved in comparison with the tenth aspect of the present invention.

According to the twelfth aspect of the present invention, the control part returns the process to the starting operation after causing the power converting part to stop outputting AC power over a predetermined stop time after the time integrated value of the amplitude of the current outputted to the discharge lamp reaches the upper limit value and the electrode heating operation is finished, whereby startability can be improved in comparison with the tenth aspect of the present invention and it is made difficult, in comparison with the eleventh aspect of the present invention, to have half-wave discharge in the discharge lamp in the electrode heating operation after returning to the starting operation.

According to the thirteenth aspect of the present invention, in the eleventh or twelfth aspect of the present invention, the control part counts the number of times of returning from the electrode heating operation to the starting operation, and causes the power converting part to stop outputting AC power when the time integrated value of the amplitude of the current outputted to the discharge lamp reaching an upper limit value in the electrode heating operation performed after the number of times reached the upper limit number of times.

According to the present invention, it is made possible to prevent the excessive electrical stress from being applied to the discharge lamp and the circuit components resulting from unlimitedly repeating the starting operation and the electrode heating operation.

### [Best Mode for Carrying Out the Invention]

Explained below will be a best mode for carrying out the present invention referring to drawings.

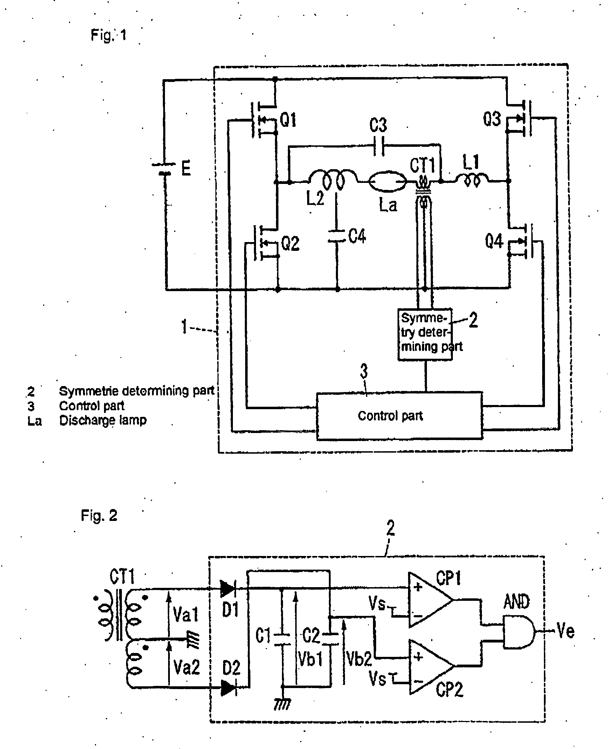

As shown in Fig. 1, a discharge lamp lighting device 1 according to the present embodiment is provided to light a hot-cathode type discharge lamp La such as a high-pressure discharge lamp which is also called HID (high-intensity discharge lamp), including, as a power converting part for converting DC power inputted from a DC power source E into AC power, a full bridge circuit including four switching elements Q1 to Q4. A field effect transistor (FET) is used for the switching elements Q1 to Q4 in the present embodiment. Also connected to one of output ends of the above full bridge circuit, that is, a connection point of the switching elements Q3 and Q4 which constitute one of two series circuits which include two of the switching elements Q1 to Q4 respectively and are connected in parallel from each other between output ends of the DC power source E, is one end (i.e. one of electrodes) of the discharge lamp La via a series circuit of a first inductance L1 and a primary winding of a current transformer CT1.
Further the other output end of the above full bridge circuit, that is, a connection point of the switching elements Q1 and Q2 which constitute the other series circuit, is connected to the other end (i.e. other electrode) of the discharge lamp La via a second inductance L2. Also connected between the connection point of the switching elements Q1 and Q2 which constitute the other series circuit and a connection point of the primary winding of the current transformer CT1 and the first inductance L1 is a first capacitor C3. Additionally, the second inductance L2 serves as a so-called autotransformer having a tap which is connected to the ground via a second capacitor C4. That is, the first inductance L1, the first capacitor C3, the second inductance L2 and the second capacitor C4 constitute, together with the discharge lamp La, a resonance circuit (referred to as a "load circuit" hereinafter) connected between output ends of the power converting part.

The present embodiment further includes a symmetry determining part 2 which is connected to a secondary winding of the current transformer CT1 and determines whether or not a current Ila outputted to the discharge lamp La (referred to as a "lamp current" hereinafter) is in a positive-negative symmetrical state, and a control part 3 for on/off-driving each of the switching elements Q1 to Q4.

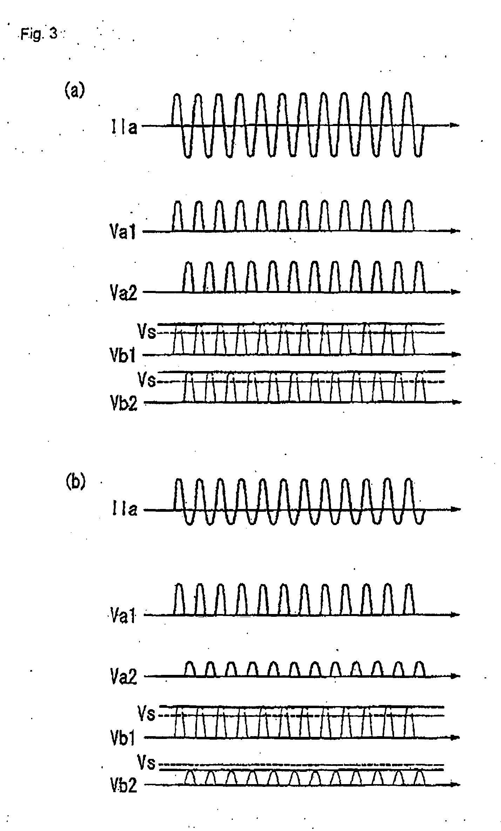

The symmetry determining part 2 includes, as shown in Fig. 2, two comparators CP1 and CP2 each having a non-inverting input terminal connected to respective one end of the secondary winding of the current transformer CT1 via diodes D1 and D2 and an inverting input terminal to which a predetermined symmetry determining voltage Vs is inputted, and an AND circuit for outputting, to the control part 3, AND of outputs from these two comparators CP1 and CP2. Arranged in the center of the secondary winding of the current transformer CT1 is a tap which is connected to the ground. Connection points between the non-inverting input terminals of each of the comparators CP1 and CP2 and the diodes D1 and D2 are connected to the ground via capacitors C1 and C2, respectively. That is, charging voltages Vb1 and Vb2 of each of the capacitors C1 and C2 correspond to peak values of output voltages Va1 and Va2 from the diodes D1 and D2, respectively, that is, peak values of the lamp current Ila in directions (or polarities) corresponding to the capacitors C1 and C2, respectively, and these charging voltages Vb1 and Vb2 are inputted to the non-inverting input terminals of the comparators CP1 and CP2 corresponding to the capacitors C1 and C2, respectively. As shown in Fig. 3(a), in the case where the lamp current Ila is in a symmetrical state, both the charging voltages Vb1 and Vb2 of the respective capacitors C1 and C2 exceed the symmetry determining voltage Vs, whereby an output Ve of the AND circuit (i.e. output of the symmetry determining part 2, referred to as a "determining output" hereinafter) exhibits an H level. In contrast, in the case where the lamp current is in an asymmetrical state as shown in Fig. 3(b), the charging voltages Vb2 of the capacitor C2 serving as one of the capacitors to fall under the symmetry determining voltage Vs, so that the determining output Ve results in an L level. That is, the fact that the determining output Ve is in the H level means that power outputted to the discharge lamp La is determined to be symmetrical by the symmetry determining part 2, and, in contrary, the fact that the determining output Ve is in the L level means that power outputted to the discharge lamp La is determined to be asymmetrical by the symmetry determining part 2.

The control part 3 on/off-drives the switching elements Q1 to Q4 so that the switching elements Q1 to Q4 diagonally positioned from each other are turned on simultaneously and the switching elements Q1 to Q4 serially connected from each other are turned on/off alternately. DC power received from the DC power source E is therefore converted into AC power, and frequency of this AC power corresponds to a frequency in polarity inversion by the above on/off driving (referred to as an "operating frequency").

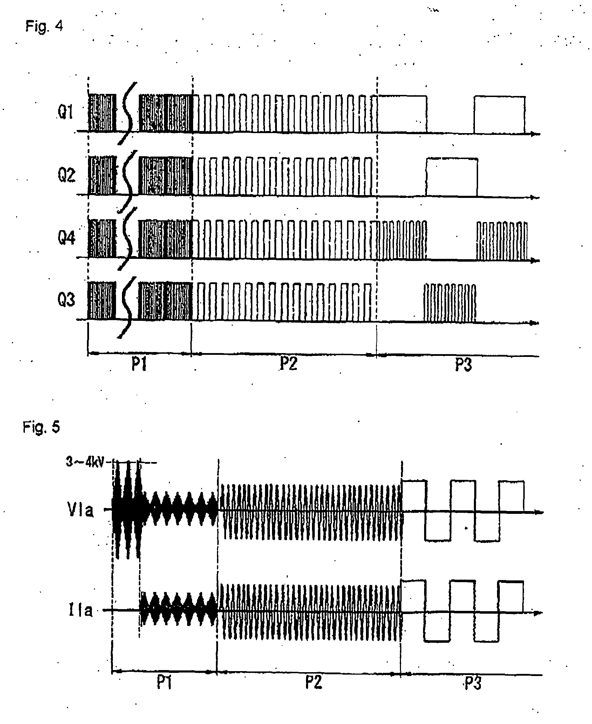

Explained below in detail by using Figs. 4 to 6 will be operations of the control part 3. Here, Fig. 4 shows a driving signal inputted to each of the switching elements Q1 to Q4, or more specifically a voltage applied between a gate and a source thereof, wherein each of the switching elements Q1 to Q4 is turned on in a period during which the above driving signal exhibits the H level and turned off in a period during which the above driving signal exhibits the L level.

When power is supplied (S1), the control part 3 starts a starting operation in order to initially start discharge in the discharge lamp La (S2). During a starting period P1 to perform the starting operation, the control part 3 changes an operating frequency periodically in a range with a width of about several tens kHz by setting the operating frequency to several hundreds kHz. During this starting period P1, the operating frequency is used as a resonance frequency (or an integer fraction thereof) in a resonance circuit including a primary winding portion of the second inductance L2 serving as an autotransformer, that is, a portion between the connection point of the switching elements Q1 and Q2 and the tap, and the second capacitor C4, followed by boosting a resonance voltage occurring at this time by the second inductance L2 serving as the autotransformer, whereby a voltage Vla outputted to the discharge lamp La (referred to as a "lamp voltage" hereinafter) reaches a voltage required for starting, that is, a start of discharging (e.g. 3 to 4kV), so that the discharge lamp La is started.
That is, the second inductance L2 and the second capacitor C2 constitute a starting part in the claims. In the example of Fig. 5, the discharge lamp La is started and the lamp current Ila starts flowing in a third period of a periodical changing of the operating frequency as stated above, and an amplitude of the lamp voltage Vla is decreased due to an impedance change accompanied by the start of the discharge lamp La.

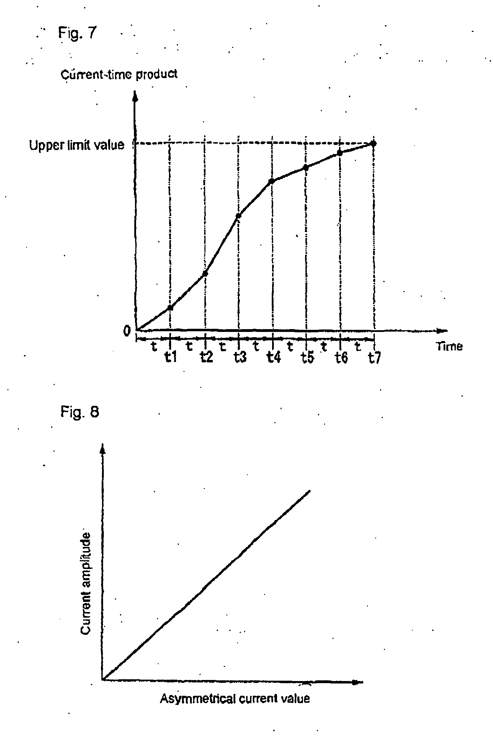

After continuing the above starting operation for a predetermined period of time, the control part 3 finishes the starting operation and allows the process to proceed to an electrode heating period P2 to perform an electrode heating operation of turning an operating frequency to be smaller (e.g. several tens kHz) than that in the starting operation (S3). The operating frequency during the electrode heating operation is a relatively high frequency which is close to a resonance frequency in a load circuit connected between output ends of the full bridge circuit, in comparison with an operating frequency in a steady operation to be described later, whereby each electrode of the discharge lamp La is heated. During the electrode heating period P2, the control part 3 maintains power supplied to the discharge lamp La up to predetermined timing at which the lamp current Ila should be detected (referred to as a "current detection timing" hereinafter) (NO in S4). More specifically, the current detection timing is, for example, periodical timing with predetermined intervals of detection time t as shown in Fig. 7. Then, at current detection timing (YES in S4), reference to the determination by the symmetry determining part 2 is made (step S5), and if the symmetry determining part 2 determines the lamp current Ila is in a symmetrical state (i.e. the determining output Ve in the H level, YES in S5), the electrode heating operation is finished to proceed to the steady operation (S6).

During a steady period P3 to perform the steady operation, the control part 3 supplies, to the discharge lamp La, rectangular wave AC power for maintaining lighting of the discharge lamp La by bringing the operating frequency to be much lower (e.g. several hundreds Hz) than that during the electrode heating operation. During the steady operation, the control part 3 also performs a PWM control of adjusting power supplied to the discharge lamp La by turning on/off each of the switching elements Q3 and Q4 in one of the series circuit with a predetermined duty ratio without constantly turning them on even in a period during which the diagonally positioned switching elements Q1 and Q2 are turned on. Further performed by the control part 3 during the steady operation is to detect fade out of the discharge lamp La on the basis of, for example, the lamp current Ila (S7), and if the fade out is detected (YES in S7), the steady operation is finished to return to the starting operation in step S2.

Moreover, if the symmetry determining part 2 determines that the lamp current Ila is in an asymmetrical state in step S5 (i.e. the determining output Ve in the L level, NO in S5), the amplitude of the lamp current Ila (referred to as a "current amplitude" hereinafter) is changed (S8), followed by returning to step S3 to continue the electrode heating operation. Changing the current amplitude in the above step S8 is realized by, for example, changing an operating frequency, and changed current amplitude is increased to be larger than the current amplitude at least in starting the electrode heating operation. More specifically, the control part 3 makes the current amplitude larger as an increase in the asymmetrical current value as shown in Fig. 8 by obtaining an absolute value of the difference of the amplitude (or peak height) between positive and negative polarities in the lamp current Ila (referred to as an "asymmetrical current value" hereinafter) from the symmetry detection part 2. Although the current amplitude is increased linearly with respect to the asymmetrical current value in Fig. 8, the current amplitude may have an upper limit value, more specifically, the current amplitude value may be maintained in the upper limit value when an asymmetrical current value is larger than a fixed value and even if the asymmetrical current value is increased to exceed the fixed value in any ranges. In this case, the graph in Fig. 8 is provided in a polygonal graph form. The upper limit value of the current amplitude is established so that, for example, an effective value of the lamp current Ila corresponds to a value equal to or less than double of a rated current value of the discharge lamp La which is assumedly used.

Further the control part 3 calculates a time integrated value of the current amplitude (referred to as a "current-time product" hereinafter), as needed during the electrode heating operation. The control part 3 also determines whether or not the current-time product has reached a predetermined upper limit value at current detection timing (S9). In the case where the current-time product does not reach the upper limit value, the electrode heating operation is continued, while in the case where the current-time product has reached the upper limit value, the electrode heating operation is finished to stop power supply to the discharge lamp La by, for example, turning off each of the switching elements Q1 to Q4 in the full bridge circuit (S10). That is, the electrode heating operation is continued while changing the current amplitude in accordance with an asymmetrical current value at intervals of the detection time t until the lamp current Ila is determined to be symmetrical in step S5 or until a current-time product reaches an upper limit value in step S9. In the example of Fig. 7, power supply to the discharge lamp La is stopped resulting from the fact that a current-time product has reached an upper limit value at seventh current detection timing t7.

According to the above configuration, timing to finish the electrode heating operation is set to timing at which the lamp current Ila is determined to be symmetrical by the symmetry determining part 2, whereby the amount of power supplied to the discharge lamp La during the electrode heating operation can be adjusted appropriately without making the power excessively large while preventing the lighting from being fade-out after proceeding to the steady operation.

Here, an asymmetrical current, that is, half-wave discharge in the discharge lamp is considered to occur due to unstable discharge of electrons observed when the temperature of electrodes of the discharge lamp is too low. In the present embodiment, the current amplitude is increased at least once if the lamp current Ila is determined to be asymmetric by the symmetry determining part 2, whereby making it easier to raise the temperature of electrodes of the discharge lamp La in comparison with the case of not increasing the current amplitude, so that proceeding to the steady operation can be realized in a shorter period of time.

Furthermore, power supply to the discharge lamp La is stopped if a current-time product has reached an upper limit value in step S9, whereby the electrical stress applied to the discharge lamp La and the circuit components can be suppressed in comparison with the case in which the electrode heating operation is continued unlimitedly.

Although the current amplitude is changed at every current detection timing in the above embodiment, the current amplitude may be change only once at first current detection timing t1. In this case, the graph shown in Fig. 7 will be linearly extended at the time of the first current amplitude change t1 and thereafter. This case may be further realized by setting the changed current amplitude constant regardless of an asymmetrical current value. Also shown in the example of Fig. 7 is that a period of time from the start of the electrode heating operation to the first current detection timing t1 is the same as the period of time set for the intervals of the following current detection timing (detection time t), but the period of time from the start of the electrode heating operation to the first current detection timing t1 may also be set differently from the period of time set for the intervals of the following current detection timing.

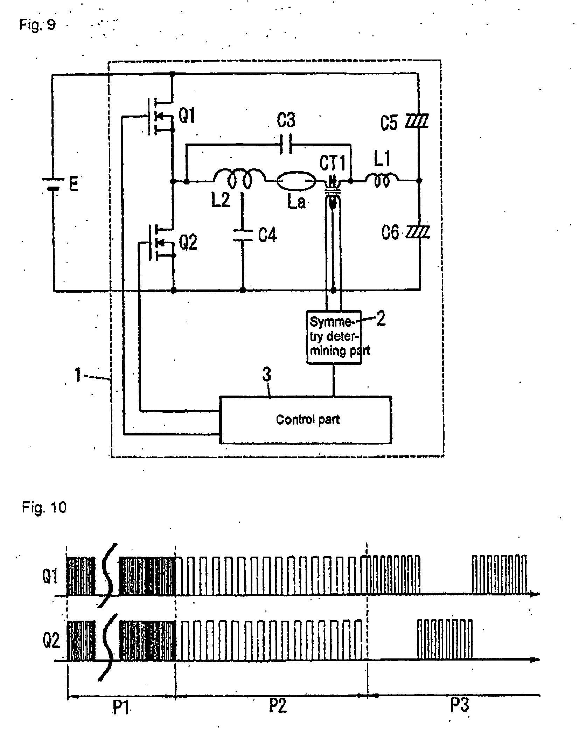

Note that a circuit configuration is not limited to the above configuration and a half bridge circuit as shown in Fig. 9 in which the respective switching elements Q3 and Q4 to constitute one of the series circuits are replaced with capacitors C5 and C6 respectively may also be employed in place of the full bridge circuit as shown in Fig. 1. In this case, as shown in Fig. 10, the starting period P1 and the electrode heating period P2 are realized in common with those of the example in Fig. 1 in terms of on/off-driving of the two switching elements Q1 and Q2 serially connected from each other, but a PWM control is performed in the steady period P3 in which output power to the discharge lamp La is adjusted with a duty ratio obtained in turning on/off the switching elements Q1 and Q2 which should be turned on in a period during which polarity is not inverted.

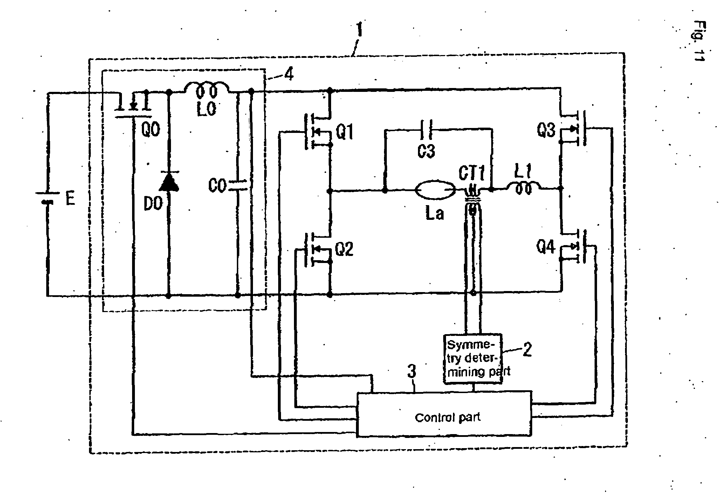

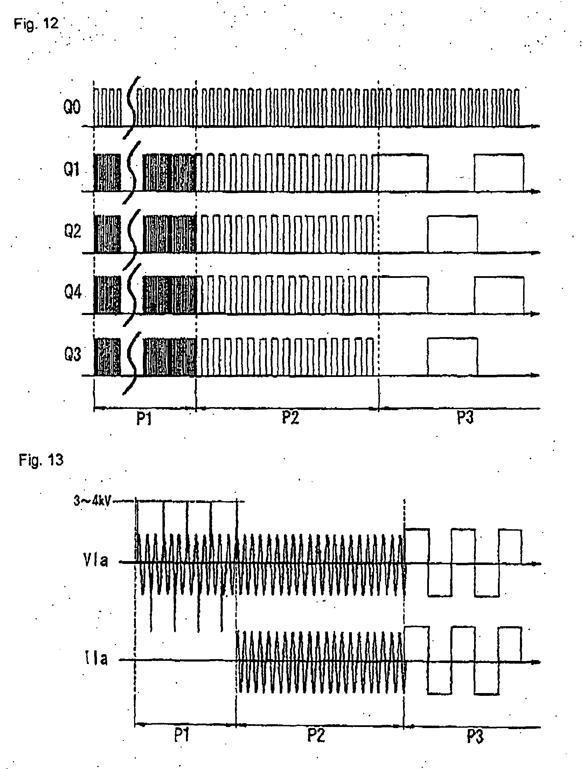

Alternatively, a step-down chopper circuit 4 as shown in Fig. 11 may also be arranged to step down an output voltage of a DC power source E so as to output to the full bridge circuit. In this case, the full bridge circuit including the four switching elements Q1 to Q4 and the above step-down chopper circuit 4 constitute a power converting circuit in the claims. In the example of Fig. 11, the step-down chopper circuit 4 includes a switching element Q0 with one end connected to an output end of the DC power source E on a high voltage side and the other end connected to an input end of the full bridge circuit via an inductance L0, a diode D0 with a cathode connected to a connection point of the switching element Q0 and the inductance L0 and an anode connected to the ground, and a capacitor C0 connected between input ends of the full bridge circuit, that is, between output ends of the step-down chopper circuit 4. Also omitted in the example of Fig. 11 are the second inductance L2 and the second capacitor C4 in the load circuit, wherein a high voltage for start is outputted to the discharge lamp La by a resonance operation in a resonance circuit including the first capacitor C3 and the first inductance L1. That is, the first capacitor C3 and the first inductance L1 constitute the starting part in the claims. Furthermore, as shown in Fig. 12, the control part 3 controls power supplied to the discharge lamp La by a duty ratio obtained in turning on/off the switching element Q0 in the step-down chopper circuit Q4, which means no PWM control is performed by turning on/off the switching elements Q1 to Q4 in the full bridge circuit even in the steady period P3.

In addition, a pulse generating circuit (not shown) may also be arranged as a starting part to generate a high voltage pulse for start of the discharge lamp La during the starting operation as shown in Fig. 13. In this case, an operating frequency during the starting operation can be the same as an operating frequency during the electrode heating operation. The aforementioned pulse generating circuit can be realized by a well known technique, so that a detailed drawing and explanation thereof will be omitted.

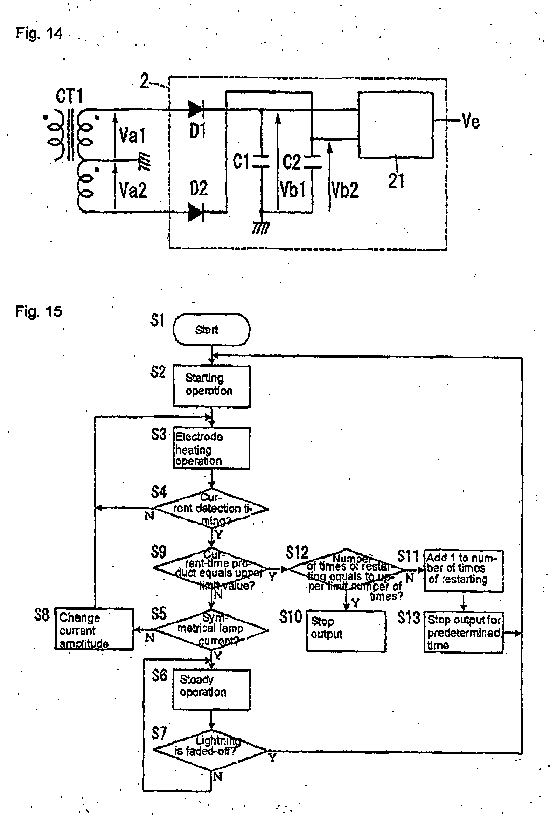

Moreover, the symmetry determining part 2 is not limited to the one shown in Fig. 2 and may be, for example, , the one shown in Fig. 14. The symmetry determining part 2 of Fig. 14 includes, in place of the comparators CP1 and CP2, a calculation part 21 for calculating an absolute value |Vb1 - Vb2| obtained from the difference of the charging voltages Vb1 and Vb2 inputted from the capacitors C1 and C2 and comparing the absolute value to a predetermined determination threshold. The calculation part 21 sets the output Ve to the control part 3 (i.e. determining output) to the H level by determining the lamp current Ila is symmetrical if the above absolute value |Vb1 - Vb2| is less than the determination threshold, whereas it sets the determining output Ve to the L level by determining the lamp current Ila is asymmetrical if the above absolute value |Vb1 - Vb2| is equal to or more than the determination threshold.

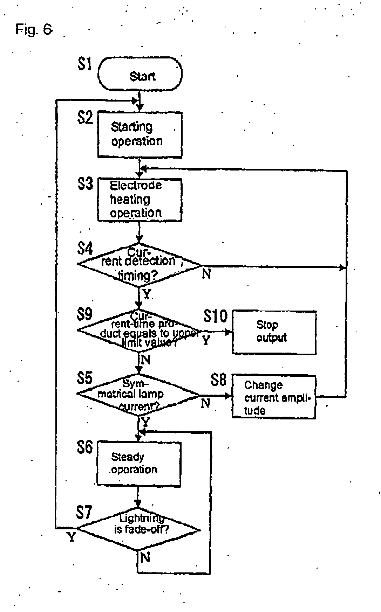

In addition, an operation performed when the current-time product has reached an upper limit value (i.e. YES in step S9) may also be realized by returning to the starting operation in step S2 as shown in Fig. 15 in place of instantly stopping power supply to the discharge lamp La as shown in Fig. 6. Employing this configuration will enable improvement of startability in comparison with the example of Fig. 6. Further performed in the example of Fig. 15 are counting the number of times to return of returning from the electrode heating operation to the starting operation (referred to as a "number of times of restarting" hereinafter) in step S11 and comparing it to a predetermined upper limit number of times in step S12, and power supply to the discharge lamp La is stopped by proceeding to step S10 without returning to step S2 if the number of times of restarting has reached the upper limit number of times. That is, the process does not return to the starting operation more than the upper limit number of times, whereby making it possible to prevent an electrical stress from unnecessarily being applied to the circuit components by repeating the above loop unlimitedly. In the example of Fig. 15, the control part 3 further stops power supply to the discharge lamp La by, for example, turning off each of the switching elements Q1 to Q4 over a predetermined period of time before returning to step S2 (S13). Therefore, in comparison with the case of instantly returning to step S2 without arranging step S13, even if, for example one of electrodes exhibits a higher temperature than the other electrode in the discharge lamp La, it is made difficult to have a half-wave discharge in a subsequent electrode heating operation by realizing a smaller temperature difference between the electrodes resulting from temperature reduction in each of the electrodes in a stop period prior to start the starting operation again.

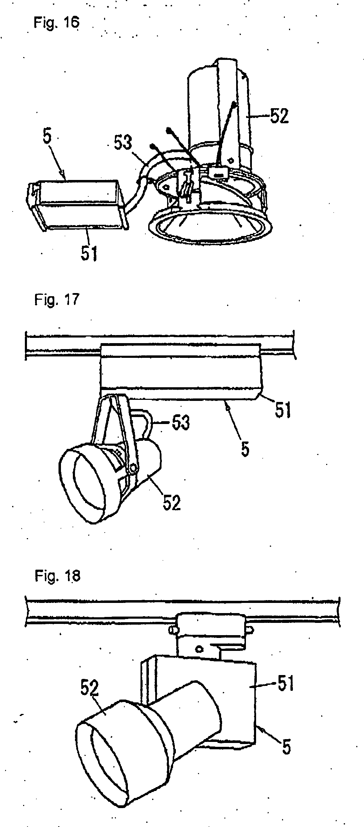

The aforementioned various kinds of the discharge lamp lighting devices can be used for, for example, each of the illumination fixtures 5 shown in Figs. 16 to 18. Each of the illumination fixtures 5 shown in Figs. 16 to 18 includes a fixture main body 51 for storing the discharge lamp lighting device 1, and a lamp body 52 for holding the discharge lamp La. Each of the illumination fixtures 5 shown in Fig. 16 and 17 also includes a power supply line 53 for electrically connecting the discharge lamp lighting device 1 and the discharge lamp La. The aforementioned various kinds of the discharge lamp lighting devices 5 can be realized by a well known technique, so that detailed explanation thereof will be omitted.

### [Brief Description of the Drawings]

[Fig. 1] Fig. 1 is a circuit block diagram showing an embodiment according to the present invention.
[Fig. 2] Fig. 2 is a circuit diagram showing a symmetry determining part in the embodiment according to the present invention.
[Fig. 3] Fig. 3 is an explanatory diagram showing one example of an operation in the symmetry determining part in the embodiment according to the present invention, showing a case of having a symmetrical lamp current in Fig. 3(a) and a case of having an asymmetrical lamp current in Fig. 3(b).
[Fig. 4] Fig. 4 is an explanatory diagram showing one example of a driving signal inputted from a control part to each of switching elements in the embodiment according to the present invention.
[Fig. 5] Fig. 5 is an explanatory diagram showing one example of an operation in the embodiment according to the present invention.
[Fig. 6] Fig. 6 is a flowchart showing one example of an operation in the embodiment according to the present invention.
[Fig. 7] Fig. 7 is an explanatory diagram showing one example of an electrode heating operation in the embodiment according to the present invention.
[Fig. 8] Fig. 8 is an explanatory diagram showing one example of a relationship between an asymmetrical current value and a current amplitude in the embodiment according to the present invention.
[Fig. 9] Fig. 9 is a circuit block diagram showing a modified example of the embodiment according to the present invention.
[Fig. 10] Fig. 10 is an explanatory diagram showing one example of a driving signal inputted from a control part to each of switching elements in the modified example of Fig. 9.
[Fig. 11] Fig. 11 is a circuit block diagram showing another modified example of the embodiment according to the present invention.
[Fig. 12] Fig. 12 is an explanatory diagram showing one example of the driving signal inputted from the control part to each of the switching elements in a modified example of Fig. 11.
[Fig. 13] Fig. 13 is an explanatory diagram showing an operation in yet another modified example of the embodiment according to the present invention.
[Fig. 14] Fig. 14 is a circuit diagram showing a modified example of the symmetry determining part in the embodiment according to the present invention.
[Fig. 15] Fig. 15 is a flowchart showing a modified example of the operation in the embodiment according to the present invention.
[Fig. 16] It is a perspective view showing one embodiment of an illumination fixture using the embodiment of the present invention.
[Fig. 17] It is a perspective view showing another example of the illumination fixture using the embodiment of the present invention.
[Fig. 18] It is a perspective view showing yet another embodiment of the illumination fixture using the embodiment of the present invention.
[Fig. 19] Figs. 24a and 24b are explanatory diagrams of examples of a waveform in a lamp current, showing a case of having an insufficient duration time of the electrode heating operation in Fig. 24(a) and a case of having sufficiently long duration time of the electrode heating operation in Fig. 24(b).

### [Description of Reference Numerals]

- 1.: Discharge lamp lighting device
- 2.: Symmetry determining part
- 3.: Control part
- 4.: Step-down chopper circuit
- 5.: Illumination fixture
- 51.: Fixture main body
- La.: Discharge lamp

Fig. 1
1) 2. Symmetry determining part
   3. Control part
   La. Discharge lamp
2) Symmetry determining part
3) Control part

Fig. 6
1) Start
2) Starting operation
3) Electrode heating operation
4) Current detection timing?
5) Current-time product equals to upper limit value?
6) Symmetrical lamp current?
7) Steady operation
8) Lighting is fade-off?
9) Stop output
10) Change current amplitude

Fig. 7
1) Current-time product
2) Upper limit value
3) Time

Fig. 8
4) Current amplitude
5) Asymmetrical current value

Fig. 9
1) Symmetry determining part
2) Control part

Fig. 11
1) Symmetry determining part
2) Control part

Fig. 15
1) Start
2) Starting operation
3) Electrode heating operation
4) Current detection timing?
5) Current-time product equals upper limit value?
6) Change current amplitude
7) Symmetrical lamp current?
8) Steady operation
9) Lighting is faded-off?
10) Number of times of restarting equals to upper limit number of times?
11) Stop output
12) Add 1 to number of times of restarting
13) Stop output for predetermined time

Fig. 19
1) Lamp current waveform

## Claims

1. A discharge lamp lighting device comprising:
a power converting part for receiving DC power and outputtingAC power;
a starting part connected between output ends of the power converting part together with a discharge lamp (La), and generating a high voltage for starting the discharge lamp; and
a control part (3) for controlling the power converting part, wherein:
the control part (3) performs, at the start of the discharge lamp (La), after performing a starting operation to allow the discharge lamp (La) to start with a high voltage generated by the starting part and before starting a steady operation to allow the power converting part to output AC power for maintaining the lighting of the discharge lamp (La) to the discharge lamp, an electrode heating operation to make an output frequency of the power converter part higher than a frequency in the steady operation in order to heat each electrode of the discharge lamp (La);
the discharge lamp lighting device (1) includes a symmetry determining part (2) for determining whether or not an output current (Ila) outputted to the discharge lamp (La) is in a positive-negative symmetrical state; and
the control part (3) refers to a determination result by the symmetry determining part (2) at a current detection timing with predetermined time intervals during the electrode heating operation, and shifts the operation to the steady operation when the symmetry determining part (2) determines that the output current (Ila) is in the positive-negative symmetrical state at the current detection timing, while increases an output current (Ila) to the discharge lamp (La) to be larger than that at least in starting the electrode heating operation when the symmetry determining part (2) determines that the output current (Ila) is in the positive-negative asymmetrical state,
wherein the control part (3) increases the current amplitude of the output current (Ila) to the discharge lamp (La) when it has been detected that the absolute value of the difference of the amplitude between negative and positive polarities in the lamp current (Ila), which is characteristic of a predetermined asymmetry in the lamp current, has increased.

2. The discharge lamp lighting device according to claim 1, wherein the power converting part includes a step-down chopper circuit (4) for stepping down the received DC power, and a full bridge circuit (Q1-Q4) for converting the DC output power of the step-down chopper circuit (4).

3. The discharge lamp lighting device according to claim 1, wherein the power converting part includes a full bridge circuit (Q1-Q4), and the control part (3) controls output power of the power converting part by a duty ratio obtained in turning on/off a switching element (Q1-Q4) including the full bridge circuit.

4. The discharge lamp lighting device according to claim 1, wherein the power converting part is formed of a half bridge circuit (Q1, Q2), and the control part (3) controls output power of the power converting part by a duty ratio obtained in turning on/off a switching element (Q1, Q2) including the half bridge circuit.

5. The discharge lamp lighting device according to any one of claims 1 to 4, wherein the control part (3) increases an output current (Ila) to the discharge lamp (La) resulting from the determination of the symmetry determining part (2) that the output current is in the positive-negative asymmetrical state only at first current detection timing, and, after that, sets an output current (Ila) to the discharge lamp constant until the electrode heating operation is finished.

6. The discharge lamp lighting device according to any one of claims 1 to 5, wherein the control part (3) calculates as needed, during the electrode heating operation, a time integrated value of an amplitude of a current (Ila) outputted to the discharge lamp, as well as finishes the electrode heating operation when the time integrated value reaches a predetermined upper limit value.

7. The discharge lamp lighting device according to claim 6, wherein the control part (3) causes the power converting part to stop outputting AC power after a time integrated value of the amplitude of the current (Ila) outputted to the discharge lamp (La) reaches the upper limit value and the electrode heating operation is finished.

8. The discharge lamp lighting device according to claim 6, wherein the control part (3) returns the process to the starting operation after the time integrated value of the amplitude of the current (Ila) outputted to the discharge lamp (La) reaches the upper limit value and the electrode heating operation is finished.

9. The discharge lamp lighting device according to claim 6, wherein the control part (3) returns the process to the starting operation after causing the power converting part to stop outputting AC power over a predetermined stop time, after the time integrated value of the amplitude of the current (Ila) outputted to the discharge lamp (La) reaches the upper limit value and the electrode heating operation is finished

10. The discharge lamp lighting device according to claim 8 or 9, wherein the control part (3) counts the number of times of returning from the electrode heating operation to the starting operation, and causes the power converting part to stop outputting AC power, when the time integrated value of the amplitude of the current (Ila) outputted to the discharge lamp (La) reaching the upper limit value in the electrode heating operation after the number of times reached a predetermined upper limit number of times,.

11. An illumination fixture (5) comprising the discharge lamp lighting device (1) according to any one of claims 1 to 10 and a fixture main body (51) for holding the discharge lamp lighting device (1).

## Patentansprüche

1. Leuchtvorrichtung für eine Entladungslampe, die aufweist:
ein Leistungswandlerteil zum Empfang von DC-Leistung und zur Ausgabe von AC-Leistung;
ein Startteil, das zwischen Ausgangsenden des Leistungswandlerteils gemeinsam mit einer Entladungslampe (La) angeschlossen ist und eine Hochspannung zum Starten der Entladungslampe erzeugt; und
ein Steuerungsteil (3) zur Steuerung des Leistungswandlerteils, wobei:
das Steuerungsteil (3) bei dem Start der Entladungslampe (La) nach der Durchführung eines Startbetriebsvorgangs, um der Entladungslampe (La) zu ermöglichen, mit einer durch das Startteil erzeugten Hochspannung zu starten, und bevor ein stationärer Betrieb gestartet wird, um dem Leistungswandlerteil zu ermöglichen, AC-Leistung zur Aufrechterhaltung der Beleuchtung durch die Ertladungslampe (La) zu der Entladungslampe auszugeben, einen Elektrodenaufheizbetriebsvorgang durchführt, um eine Ausgangsfrequenz des Leistungswandlerteils höher als eine Frequenz in dem stationären Betrieb zu machen, um jede Elektrode der Entladungslampe (La) aufzuheizen;
wobei die Leuchtvorrichtung (1) für eine Entladungslampe ein Symmetriebestimmungsteil (2) zur Bestimmung, ob sich ein Ausgangsstrom (Ila), der zu der Entladungslampe (La) ausgegeben wird, in einem symmetrischen Zustand bezüglich positiv und negativ befindet oder nicht, enthält; und
das Steuerungsteil (3) auf ein Ergebnis der Bestimmung durch das Symmetriebestimmungsteil (2) zu einem Stromerfassungszeitpunkt bei vorbestimmten Zeitintervallen während des Elektrodenaufheizbetriebsvorgangs zurückgreift und den Betrieb zu dem stationären Betrieb wechselt, wenn das Symmetriebestimmungsteil (2) bestimmt, dass sich der Ausgangsstrom (Ila) in dem Stromerfassungszeitpunkt in dem symmetrischen Zustand bezüglich positiv und negativ befindet, während es einen Ausgangsstrom (Ila) zu der Entladungslampe (La) vergrößert, damit dieser größer ist als derjenige wenigstens beim Starten des Elektrodenaufheizbetriebsvorgangs, wenn das Symmetriebestimmungsteil (2) bestimmt, dass sich der Ausgangsstrom (Ila) in dem unsymmetrischen Zustand bezüglich positiv und negativ befindet,
wobei das Steuerungsteil (3) die Stromamplitude des Ausgangsstrom (Ila) zu der Entladungslampe (La) vergrößert, wenn erfasst wird, dass sich der Absolutwert der Differenz der Amplitude zwischen der negativen und der positiven Polarität in dem Lampenstrom (Ila), die für eine vorbestimmte Unsymmetrie in dem Lampenstrom charakteristisch ist, vergrößert hat.

2. Leuchtvorrichtung für eine Entladungslampe gemäß Anspruch 1, wobei das Leistungswandlerteil eine Tiefsetzsteller-Chopperschaltung (4) zur Tiefsetzung der empfangenen DC-Leistung und eine Vollbrückenschaltung (Q1-Q4) zur Umwandlung der DC-Ausgangsleistung der Tiefsetzsteller-Chopperschaltung (4) enthält.

3. Leuchtvorrichtung für eine Entladungslampe gemäß Anspruch 1, wobei das Leistungswandlerteil eine Vollbrückenschaltung (Q1-Q4) enthält und das Steuerungsteil (3) die Ausgangsleistung des Leistungswandlerteils durch ein Tastverhältnis steuert, das beim Ein-/Ausschalten eines Schaltelementes (Q1-Q4), das die Vollbrückenschaltung enthält, erhalten wird.

4. Leuchtvorrichtung für eine Entladungslampe gemäß Anspruch 1, wobei das Leistungswandlerteil aus einer Halbbrückenschaltung (Q1, Q2) gebildet ist und das Steuerungsteil (3) die Ausgangsleistung des Leistungswandlerteils durch ein Tastverhältnis steuert, das beim Ein-/Ausschalten eines Schaltelementes (Q1, Q2), das die Halbbrückenschaltung enthält, erhalten wird.

5. Leuchtvorrichtung für eine Entladungslampe gemäß einem beliebigen der Ansprüche 1 bis 4, wobei das Steuerungsteil (3) einen Ausgangsstrom (Ila) zu der Entladungslampe (La) als Ergebnis der Bestimmung des Symmetriebestimmungsteils (2), das sich der Ausgangsstrom in dem unsymmetrischen Zustand bezüglich positiv und negativ befindet, nur in einem ersten Stromerfassungszeitpunkt erhöht und danach einen Ausgangsstrom (Ila) zu der Entladungslampe konstant einstellt, bis der Elektrodenaufheizbetriebsvorgang beendet ist.

6. Leuchtvorrichtung für eine Entladungslampe gemäß einem beliebigen der Ansprüche 1 bis 5, wobei das Steuerungsteil (3) je nach Bedarf während des Elektrodenaufheizbetriebsvorgangs einen zeitlich integrierten Wert einer Amplitude eines zu der Entladungslampe ausgegebenen Stroms (Ila) berechnet sowie den Elektrodenaufheizbetriebsvorgang beendet, wenn der zeitlich integrierte Wert einen vorbestimmten oberen Grenzwert erreicht.

7. Leuchtvorrichtung für eine Entladungslampe gemäß Anspruch 6, wobei das Steuerungsteil (3) das Leistungswandlerteil veranlasst, die Ausgabe von AC-Leistung zu stoppen, nachdem ein zeitlich integrierter Wert der Amplitude des zu der Entladungslampe (La) ausgegebenen Stroms (Ila) den oberen Grenzwert erreicht und der Elektrodenaufheizbetriebsvorgang beendet ist.

8. Leuchtvorrichtung für eine Entladungslampe gemäß Anspruch 6, wobei das Steuerungsteil (3) den Prozess zu dem Startbetriebsvorgang zurückbringt, nachdem der zeitlich integrierte Wert der Amplitude des zu der Entladungslampe (La) ausgegebenen Stroms (Ila) den oberen Grenzwert erreicht und der Elektrodenaufheizbetriebsvorgang beendet ist.

9. Leuchtvorrichtung für eine Entladungslampe gemäß Anspruch 6, wobei das Steuerungsteil (3) den Prozess zu dem Startbetriebsvorgang zurückbringt, nachdem es das Leistungswandlerteil veranlasst hat, die Ausgabe von AC-Leistung über eine vorbestimmte Stoppzeitdauer zu stoppen, nachdem der zeitlich integrierte Wert der Amplitude des zu der Entladungslampe (La) ausgegebenen Stroms (Ila) den oberen Grenzwert erreicht und der Elektrodenaufheizbetriebsvorgang beendet ist.

10. Leuchtvorrichtung für eine Entladungslampe gemäß Anspruch 8 oder 9, wobei das Steuerungsteil (3) die Häufigkeit der Rückkehr von dem Elektrodenaufheizbetriebsvorgang zu dem Startbetriebsvorgang zählt und das Leistungswandlerteil veranlasst, die Ausgabe von AC-Leistung zu stoppen, wenn der zeitlich integrierte Wert der Amplitude des zu der Entladungslampe (La) ausgegebenen Stroms (Ila) den oberen Grenzwert in dem Elektrodenaufheizbetrieb erreicht, nachdem die Häufigkeit eine vorbestimmte obere Häufigkeitsgrenze erreicht.

11. Beleuchtungsbefestigung (5), die die Leuchtvorrichtung (1) für eine Entladungslampe gemäß einem beliebigen der Ansprüche 1 bis 10 und einen Befestigungshauptkörper (51) zum Halten der Leuchtvorrichtung (1) für eine Entladungslampe aufweist.

## Revendications

1. Dispositif d'éclairage à lampe à décharge comprenant :
une partie conversion de puissance destinée à recevoir une alimentation électrique continue et à délivrer en sortie une alimentation électrique alternative ;
une partie de démarrage connectée entre les extrémités de sortie de la partie conversion de puissance en même temps qu'une lampe à décharge (La), et générant une haute tension pour démarrer la lampe à décharge ; et
une partie commande (3) pour commander la partie conversion de puissance, dans lequel :
la partie commande (3) exécute, au démarrage de la lampe à décharge (La), après avoir exécuté une opération de démarrage pour permettre à la lampe à décharge (La) de démarrer avec une haute tension générée par la partie de démarrage et avant de démarrer une opération entretenue pour permettre à la partie conversion de puissance de délivrer une alimentation électrique alternative pour maintenir l'éclairage de la lampe à décharge (La) à la lampe à décharge, une opération de chauffage d'électrode pour rendre une fréquence de sortie de la partie conversion de puissance supérieure à une fréquence dans l'opération entretenue afin de chauffer chaque électrode de la lampe à décharge (La) ;
le dispositif d'éclairage à lampe à décharge (1) comprend une partie de détermination de symétrie (2) pour déterminer si un courant de sortie (Ila) transmis à la lampe à décharge (La) est ou non dans un état symétrique positif-négatif ; et
la partie commande (3) se base sur un résultat de détermination par la partie de détermination de symétrie (2) à un instant de détection de courant à des intervalles temporels prédéterminés pendant l'opération de chauffage d'électrode, et passe à l'opération entretenue quand la partie de détermination de symétrie (2) détermine que le courant de sortie (Ila) est dans l'état symétrique positif-négatif à l'instant de détection de courant, mais augmente un courant de sortie (Ila) fourni à la lampe à décharge (La) pour qu'il soit supérieure à celui au moins de l'opération de chauffage d'électrode quand la partie de détermination de symétrie (2) détermine que le courant de sortie (Ila) est dans l'état asymétrique positif-négatif,
dans lequel la partie commande (3) augmente l'amplitude de courant du courant de sortie (Ila) fourni à la lampe à décharge (La) quand il a été détecté que la valeur absolue de la différence de l'amplitude entre les polarités négative et positive dans le courant de la lampe (Ila), qui est caractéristique d'une asymétrie prédéterminée dans le courant de la lampe, a augmenté.

2. Dispositif d'éclairage à lampe à décharge selon la revendication 1, dans lequel la partie conversion de puissance comprend un circuit d'interruption périodique abaisseur (4) pour abaisser l'alimentation continue reçue, et un circuit en pont complet (Q1-Q4) pour convertir la sortie continue du circuit d'interruption périodique abaisseur (4).

3. Dispositif d'éclairage à lampe à décharge selon la revendication 1, dans lequel la partie conversion de puissance comprend un circuit en pont complet (Q1-Q4), et la partie commande (3) commande la puissance de sortie de la partie conversion de puissance par un rapport cyclique obtenu en rendant passant/bloqué un élément de commutation (Q1-Q4) comprenant le circuit en pont complet.

4. Dispositif d'éclairage à lampe à décharge selon la revendication 1, dans lequel la partie conversion de puissance est formée d'un circuit en demi pont (Q1, Q2), et la partie commande (3) commande la puissance de sortie de la partie conversion de puissance par un rapport cyclique obtenu en rendant passant/bloqué un élément de commutation (Q1, Q2) comprenant le circuit en demi pont.

5. Dispositif d'éclairage à lampe à décharge selon l'une quelconque des revendications 1 à 4, dans lequel la partie commande (3) augmente un courant de sortie (Ila) fourni à la lampe à décharge (La) résultant de la détermination de la partie de détermination de symétrie (2) que le courant de sortie est dans l'état positif-négatif asymétrique seulement au premier instant de détection de courant, et, après cela, établit un courant de sortie (Ila) fourni à la lampe à décharge constant jusqu'à ce que l'opération de chauffage d'électrode soit finie.

6. Dispositif d'éclairage à lampe à décharge selon l'une quelconque des revendications 1 à 5, dans lequel la partie commande (3) calcule selon les besoins, pendant l'opération de chauffage d'électrode, une valeur intégrée dans le temps d'une amplitude d'un courant (Ila) transmis à la lampe à décharge, et met fin à l'opération de chauffage d'électrode quand la valeur intégrée dans le temps atteint une valeur limite supérieure prédéterminée.

7. Dispositif d'éclairage à lampe à décharge selon la revendication 6, dans lequel la partie commande (3) fait arrêter la sortie alternative de la partie conversion de puissance après qu'une valeur intégrée dans le temps de l'amplitude du courant (Ila) transmis à la lampe à décharge (La) a atteint la valeur limite supérieure et que l'opération de chauffage d'électrode est terminée.

8. Dispositif d'éclairage à lampe à décharge selon la revendication 6, dans lequel la partie commande (3) fait revenir le processus à l'opération de démarrage après que la valeur intégrée dans le temps de l'amplitude du courant (Ila) transmis à la lampe à décharge (La) a atteint la valeur limite supérieure et que l'opération de chauffage d'électrode est terminée.

9. Dispositif d'éclairage à lampe à décharge selon la revendication 6, dans lequel la partie commande (3) fait revenir le processus à l'opération de démarrage après avoir fait arrêter la sortie alternative par la partie conversion de puissance pendant un temps d'arrêt prédéterminé, après que la valeur intégrée dans le temps de l'amplitude du courant (Ila) transmis à la lampe à décharge (La) a atteint la valeur limite supérieure et que l'opération de chauffage d'électrode est terminée.

10. Dispositif d'éclairage à lampe à décharge selon la revendication 8 ou 9, dans lequel la partie commande (3) compte le nombre de retours de l'opération de chauffage d'électrode à l'opération de démarrage, et fait arrêter la sortie alternative de la partie conversion de puissance quand la valeur intégrée dans le temps de l'amplitude du courant (Ila) transmis à la lampe à décharge (La) atteint la valeur limite supérieure dans l'opération de chauffage d'électrode après que le nombre de fois a atteint un nombre limite supérieur prédéterminé.

11. Equipement d'éclairage (5) comprenant le dispositif d'éclairage à lampe à décharge (1) selon l'une quelconque des revendications 1 à 10 et un corps principal d'équipement (51) pour maintenir le dispositif d'éclairage à lampe à décharge (1).
